# EUROPÄISCHE PATENTSCHRIFT

(11) **EP 2 226 537 B1**
(45) Veröffentlichungstag und Bekanntmachung des Hinweises auf die Patenterteilung: **28.09.2011**
(21) Anmeldenummer: 09002973.7
(22) Anmeldetag: 03.03.2009
(51) Int. Cl.: F16K 15/02, F16K 27/04

(54) **Rückschlagventil und damit ausgestattete Ventileinheit**
Non-return valve and valve unit equipped with same
Clapet anti-retour et unité de soupape en étant équipée

(43) Veröffentlichungstag der Anmeldung: 08.09.2010
(73) Patentinhaber: FESTO AG & Co. KG, 73734 Esslingen (DE)
(72) Erfinder: Schubert, Dominik, 70327 Stuttgart (DE); Wolter, Eberhard, 73760 Ostfildern (DE)
(74) Vertreter: Abel, Martin

(56) Entgegenhaltungen:
- DE-A1- 1 450 600
- DE-A1- 2 448 241
- DE-A1-102007 018 068
- GB-A- 2 319 586
- US-A- 4 733 690

## Beschreibung

Die Erfindung betrifft ein Rückschlagventil, mit einer Ventilkammer, in der ein in Achsrichtung einer Hauptachse zwischen einer Schließstellung und einer Offenstellung linear bewegliches Ventilglied angeordnet ist, das die Ventilkammer in einen mit einer Zuströmöffnung verbundenen Zuströmabschnitt und einen mit einer Abströmöffnung verbundenen Abströmabschnitt unterteilt, wobei die Zuströmöffnung an einer dem Ventilglied axial gegenüberliegenden Bodenfläche in den Zuströmabschnitt einmündet und ihr eine am Ventilglied angeordnete Verschlussfläche derart gegenüberliegt, dass über die Zuströmöffnung zuströmendes Fluid das Ventilglied durch Beaufschlagung der Verschlussfläche von der Bodenfläche weg in die Offenstellung verlagert, in der die Zuströmöffnung mit einem den Zuströmabschnitt mit dem Abströmabschnitt verbindenden Überströmkanal kommuniziert, der das Ventilglied mit Querversatz bezüglich der Zuströmöffnung axial durchsetzt und ringsum durch das Ventilglied begrenzt ist, wobei die Zuströmöffnung an der Bodenfläche der Ventilkammer außermittig in den Zuströmabschnitt einmündet und das Ventilglied bezüglich der Ventilkammer verdrehgesichert ist.

Die Erfindung betrifft ferner eine mindestens ein Mehrwegeventil aufweisende Ventileinheit, die mit einem solchen Rückschlagventil ausgestattet ist.

Ein aus der DE 20 2005 016 282 U1 bekanntes Rückschlagventil enthält ein außen im Wesentlichen sternförmig konturiertes Ventilglied, das in einer Ventilkammer axial beweglich angeordnet ist und durch Federmittel ständig in eine Schließstellung vorgespannt wird, in der es an einem Ventilsitz anliegt, der eine an einer Bodenfläche der Ventilkammer einmündende Zuströmöffnung umrahmt. Das Ventilglied unterteilt die Ventilkammer in einen der Zuström-öffnung zugewandten Zuströmabschnitt und einen entgegengesetzten Abströmabschnitt. Liegt an dem Ventilglied eine Druckdifferenz zu Gunsten des Abströmabschnittes an, verharrt das Ventilglied in der Schließstellung und verhindert ein Einströmen von Fluid in die Zuströmöffnung. Sind die Druckverhältnisse umgekehrt, kann das über die Zuströmöffnung einströmende Fluid das Ventilglied vom Ventilsitz abheben und in den Zuströmabschnitt einströmen, um von dort durch einen im Bereich des Außenumfanges des Ventilgliedes ausgebildeten Überströmkanal hindurch in den Abströmabschnitt überzuströmen. Die Zuströmöffnung ist mittig im Boden der Ventilkammer angeordnet, der Überströmkanal koaxial dazu, wobei Letzterer durch am Außenumfang des Ventilgliedes angeordnete Führungsabschnitte in einzelne, gleichmäßig über den Außenumfang verteilte nutförmige Kanalabschnitte unterteilt ist.

Zwar kann dem bekannten Rückschlagventil eine zuverlässige Funktionsweise bescheinigt werden, es hat jedoch gewisse Defizite hinsichtlich des in der Offenstellung freigebbaren Strömungsquerschnittes und seines Ansprechverhaltens.

Aus der EP 0887559 B1 ist eine aus einem Mehrwegeventil bestehende Ventileinheit bekannt, die einen durch Fluidkraft betätigbaren Ventilschieber aufweist, der die Fluidströmung zwischen verschiedenen Ventilkanälen steuern kann. Einer der steuerbaren Ventilkanäle ist ein insbesondere zur Entlüftung nutzbarer Fluid-Abführkanal, in dessen Verlauf ein Rückschlagventil eingeschaltet ist, dessen Ventilglied aus einem gummielastischen Ringelement besteht, das am Ventilschieber befestigt ist, so dass es dessen Umschaltbewegung mitmacht.

Die DE 10 2007 018 068 A1 beschreibt ein Rückschlagventil der eingangs genannten Art, das eine Ventilkammer aufweist, in der ein scheibenförmiges Ventilglied axial verschiebbar angeordnet ist. Das Ventilglied ist von mehreren um sein Zentrum herum verteilten Überströmöffnungen durchsetzt, die jeweils einen kreisförmigen Querschnitt haben. An einer dem Ventilglied gegenüberliegenden Bodenfläche münden mehrere Zuströmöffnungen in die Ventilkammer ein, die ebenfalls einen kreisförmigen Querschnitt haben. Die Zuströmöffnungen und die Überströmöffnungen sind derart versetzt zueinander angeordnet, dass die Zuströmöffnungen abgedeckt werden, wenn das Ventilglied an der Bodenfläche anliegt.

Es ist die Aufgabe der vorliegenden Erfindung, ein Rückschlagventil zu schaffen, das bei kompakten Abmessungen ein gutes Ansprechverhalten aufweist und das dem hindurchströmenden Fluid einen nur geringen Strömungswiderstand bietet. Außerdem soll eine mit einem solchen Rückschlagventil ausgestattete Ventileinheit vorgeschlagen werden.

Zur Lösung dieser Aufgabe ist in Verbindung mit einem Rückschlagventil der eingangs genannten Art vorgesehen, dass die Querschnitte der Zuströmöffnung und der dem Zuströmabschnitt zugewandten Kanalmündung des Überströmkanals jeweils nach Art eines einen Umfangswinkel von zumindest im Wesentlichen 180° aufweisenden Kreissektors oder Kreisabschnittes gestaltet sind, so dass sich jeweils ein im Wesentlichen halbkreisförmiger Querschnitt ergibt, wobei die Zuströmöffnung und die dem Zuströmabschnitt zugewandte Kanalmündung des Überströmkanals so angeordnet sind, dass die linearen Sehnen ihrer Querschnitts-Konturlinien parallel zueinander verlaufen.

Die Aufgabe wird ferner gelöst durch eine Ventileinheit, die mindestens ein Mehrwegeventil aufweist, das über ein Ventilgehäuse verfügt, in dem mindestens ein beweglicher Ventilschieber angeordnet ist, wobei mindestens ein von dem Ventilschieber gesteuerter Fluid-Abführkanal der Ventileinheit mit einem im vorgenannten Sinne ausgestalteten Rückschlagventil ausgestattet ist.

Bedingt durch die außermittige Anordnung der Zuströmöffnung an der Bodenfläche der Ventilkammer kann das Rückschlagventil so ausgelegt werden, dass das in der Durchlassrichtung hindurchströmende Fluid für den Übertritt in den Überströmkanal eine nur geringe Umlenkung erfährt und insbesondere der Fluidstrahl nicht übermäßig radial aufgefächert wird. Auf diese Weise wird dem Fluid ein nur geringer Strömungswiderstand entgegengesetzt, was hohe Strömungsraten ermöglicht, wenn das Rückschlagventil in der Durchlassrichtung betrieben wird. Gleichwohl verfügt das Rückschlagventil über ein gutes Ansprechverhalten, weil das über die Zuströmöffnung stirnseitig in die Ventilkammer einströmende Fluid direkt auf die gegenüberliegende Verschlussfläche des Ventilgliedes aufprallt und dieses somit schlagartig in die Offenstellung verlagern kann. Das erfinderische Konzept ermöglicht kompakte Abmessungen des Rückschlagventils, so dass es sich bei Bedarf relativ einfach in fluidtechnische Geräte integrieren lässt.

Die bezüglich der Ventilkammer verdrehgesicherte Anordnung des Ventilgliedes gewährleistet, dass die Verschlussfläche des Ventilgliedes stets ihre der Zuströmöffnung axial gegenüberliegende Position beibehält. Dadurch ist auch sichergestellt, dass der Überströmkanal stets eine mit der Zuströmöffnung nicht fluchtende Position einnimmt und die Schließstellung gewährleistet werden kann, wenn das Ventilglied an die Bodenfläche angenähert.ist.

Als besonders vorteilhaft wird angesehen, dass die Zuströmöffnung und die dem Zuströmabschnitt zugewandte Kanalmündung des Überströmkanals nach Art eines Kreissektors oder eines Kreisabschnittes gestaltet ist, wobei der Umfangswinkel vorzugsweise zumindest im Wesentlichen 180° beträgt. Bei einem halbkreisförmigen Querschnitt der Öffnung, sollte die Anordnung so getroffen sein, dass die Sehnen der Querschnitte, also die die Endpunkte der gekrümmten Konturlinien der Querschnitte verbindenden Linien, parallel zueinander verlaufen und insbesondere nur wenig voneinander beabstandet sind.

Als besonders vorteilhaft wird eine Kombination des Rückschlagventils mit einer Ventileinheit angesehen, wobei das Rückschlagventil in einen beispielsweise zur Entlüftung dienenden Fluid-Abführkanal der Ventileinheit integriert ist, beispielsweise unmittelbar in das Ventilgehäuse eines Mehrwegeventils. Eine derartige Ausstattung von Ventileinheiten hat den Vorteil, dass sich unerwünschte Rückwirkungen vermeiden lassen, wenn die Fluid-Abführkanäle mehrerer Mehrwegeventile an einen gemeinsamen Sammel-Abführkanal angeschlossen sind. Das Rückschlagventil ermöglicht dann zwar die wunschgemäße Fluidabfuhr aus den einzelnen Mehrwegeventilen, verhindert jedoch, dass die Abluft einzelner Mehrwegeventile in andere angeschlossene Mehrwegeventile zurückströmt.

Vorteilhafte Weiterbildungen der Erfindung gehen aus den Unteransprüchen hervor.

Das Ansprechverhalten des Rückschlagventils hinsichtlich des Umschaltens in die Offenstellung kann dadurch noch weiter verbessert werden, dass das Ventilglied ohne Federbeaufschlagung in der Ventilkammer angeordnet ist und somit keine Federmittel vorhanden sind, die das Ventilglied in Richtung der Schließstellung beaufschlagen. In diesem Fall wird das Ventilglied allein durch den im Abströmabschnitt herrschenden Fluiddruck in die Schließstellung geschaltet und dort gegebenenfalls gehalten. Zum Umschalten in die Offenstellung muss keine Federkraft überwunden werden, was vor allem dann von Vorteil ist, wenn das durchzulassende Fluid unter keinem besonders hohen Druck steht, was beispielsweise der Fall ist, wenn das Rückschlagventil in den Verlauf eines Fluid-Abführkanals eines fluidtechnischen Gerätes eingeschaltet ist.

Einem guten Ansprechverhalten förderlich ist außerdem die Realisierung eines Ventilgliedes mit geringem Gewicht. In diesem Zusammenhang besteht das Ventilglied insbesondere aus Kunststoffmaterial.

Prinzipiell könnte das Ventilglied nach Art einer Membran ausgebildet sein, die im Bereich ihres Außenumfanges ortsfest an der Wandung der Ventilkammer fixiert ist und deren Umschaltbewegung durch axiale Auslenkung des zentralen Membranabschnittes bewerkstelligt wird. Als vorteilhafter, weil in der Regel kostengünstiger herstellbar und montierbar, wird allerdings ein Ventilglied angesehen, das axial verschiebbar in der Ventilkammer aufgenommen ist, wobei es von der umfangsseitigen Seitenwand der Ventilkammer in seiner möglichen Linearbewegung geführt ist. Zu Gunsten kurzer axialer Abmessungen kann das Ventilglied scheibenförmig ausgebildet sein und zweckmäßigerweise die Form eines Kolbens geringer Länge haben.

Um die Strömungsverluste möglichst gering zu halten, ist es außerdem vorteilhaft, wenn sich der Überströmkanal linear axial, also in Achsrichtung der Hauptachse, erstreckt und keine Richtungsänderungen erfährt.

Als Verdrehsicherungsmaßnahme für das Ventilglied bieten sich gleitverschieblich ineinander eingreifende Verdrehsicherungsmittel an, die zweckmäßigerweise zum einen an der Seitenwand der Ventilkammer und zum anderen im Bereich der Außenfläche des Ventilgliedes angeordnet sind. Beispielsweise kann an der Seitenwand eine sich axial erstreckende Verdrehsicherungsrippe ausgebildet sein, die in eine am Außenumfang des Ventilgliedes ausgebildete Verdrehsicherungsnut eingreift, oder umgekehrt.

Was die gegenseitige Zuordnung der Zuströmöffnung und der dem Zuströmabschnitt abgewandten Kanalmündung des Überströmkanals anbelangt, empfiehlt sich besonders eine dahingehende Platzierung, dass diese Öffnungen - in der Achsrichtung der Hauptachse betrachtet - auf entgegengesetzten Seiten der Hauptachse angeordnet sind, wobei sie sich zweckmäßigerweise, bezogen auf die Hauptachse, diametral gegenüberliegen.

Besonders zweckmäßig ist hierbei eine Anordnung, bei der die beiden Öffnungen auf einander entgegengesetzten Seiten einer Diametralebene liegen, die von der Hauptachse und einer dazu rechtwinkeligen Radialachse aufgespannt wird. Die Diametralebene unterteilt die Ventilkammer praktisch gedanklich in zwei Hälften mit bevorzugt halbkreisförmigem Querschnitt. An dieser Stelle sei erwähnt, dass die Innenkontur der Ventilkammer und die Außenkontur des Ventilgliedes vorzugsweise zylindrisch und insbesondere kreiszylindrisch ausgebildet sind, wenngleich prinzipiell auch polygonförmige Querschnitte möglich wären, insbesondere mit abgerundeten Kanten.

Um in der Offenstellung des Ventilgliedes den optimalen Durchsatz zu erzielen, empfiehlt es sich, die Querschnitte der Zuströmöffnung und des Überströmkanals zumindest im Wesentlichen gleichgroß zu wählen.

Der Überströmkanal kann durchgängig ununterteilt ausgebildet sein. Allerdings ist auch eine Gestaltung möglich, bei der sich der Überströmkanal aus mehreren separaten Kanalabschnitten zusammensetzt, die sich parallel nebeneinander erstrecken und durch mindestens eine insbesondere axial verlaufende Unterteilungswand voneinander abgetrennt sind. Besonders vorteilhaft ist eine solche Bauform bei einer Integration des Überströmkanals in das Ventilglied, da hier die erwähnte mindestens eine Unterteilungswand eine Stabilisierungsfunktion übernehmen kann und außerdem eine Leitfunktion in Bezug auf die Fluidströmung.

Zweckmäßigerweise ist das Rückschlagventil so ausgelegt, dass das Ventilglied bei Einnahme der Schließstellung an der Bodenfläche der Ventilkammer anliegt, und zwar insbesondere mit Dichtkontakt. Es besteht die Möglichkeit, an der Bodenfläche oder an der gegenüberliegenden Stirnfläche des Ventilgliedes eine Dichtungskontur vorzusehen, die insbesondere so angeordnet ist, dass sie die Zuströmöffnung umrahmt. Wenn allein auf der Basis der für die Herstellung der Bodenfläche und des Ventilgliedes verwendeten Materialien eine ausreichende Dichtheit gewährleistet werden kann, kann auf zusätzliche Dichtungsmittel auch verzichtet werden. Jedenfalls ist es von Vorteil, wenn die Schließfunktion des Rückschlagventils auf den Prinzipien eines Sitzventils basiert.

Die Ventilkammer kann zur Einsparung von Kosten unmittelbar vom Körper eines fluidtechnischen Gerätes gebildet sein, der mit dem Rückschlagventil ausgestattet ist. Um allerdings an einem solchen fluidtechnischen Gerät möglichst wenige oder gar keine konstruktiven Eingriffe vornehmen zu müssen, würde sich in der Regel empfehlen, das Rückschlagventil mit einem eigenen, insbesondere topfförmigen Gehäusekörper zu versehen, der die Ventilkammer beinhaltet. Ein solcher Gehäusekörper kann dann in eine entsprechende Ausnehmung eines Gerätes eingesetzt und insbesondere eingesteckt werden. Beispielsweise kann das Rückschlagventil in Verbindung mit einer Ventileinheit nach Art einer Patrone in den mit dem Rückschlagventil auszustattenden Fluid-Abführkanal eingesetzt werden.

Es lässt sich zusammenfassen, dass das Rückschlagventil über ein gutes Ansprechverhalten verfügt und bei entsprechender Ausgestaltung schon mit einem Druck von unter 0,1 bar ein Umschalten des Ventilgliedes ermöglicht. Zugleich lässt sich ein sehr geringer Strömungswiderstand verwirklichen. Auch wenn keine Federmittel vorhanden sind, die das Ventilglied in der Schließrichtung beaufschlagen, ist die Funktionsfähigkeit des Rückschlagventils in jeder Einbaulage gewährleistet. Der im Abströmabschnitt herrschende Fluiddruck presst das Ventilglied zuverlässig in die Schließstellung, wobei die Anpresskraft umso größer ist, je höher der in dem Abströmabschnitt herrschende Druck ist. Somit wird unabhängig vom Fluiddruck eine sichere Abdichtung in der Schließstellung gewährleistet.

Nachfolgend wird die Erfindung anhand der beiliegenden Zeichnung näher erläutert. Es zeigen im Einzelnen:
- Figur 1: eine erfindungsgemäße Ventileinheit im Schnitt, die mit zwei Rückschlagventilen der erfindungsgemäßen Bauart ausgestattet ist,
- Figur 2: einen Schnitt durch das Rückschlagventil in der Schließstellung entsprechend Schnittlinie III-III aus Figur 5, wobei der in Figur 1 strichpunktiert umrahmte Ausschnitt A gezeigt ist,
- Figur 3: wiederum im Schnitt gemäß Schnittlinie III-III das Rückschlagventil in der Offenstellung, wobei der in Figur 1 strichpunktiert umrahmte Ausschnitt B ge- zeigt ist,
- Figur 4: eine Einzeldarstellung des Rückschlagventils in einer axialen Stirnansicht mit Blickrichtung gemäß Pfeil IV aus Figur 3,
- Figur 5: eine mit Figur 4 vergleichbare Abbildung des Rück- schlagventils, allerdings in einer leicht geneig- ten, isometrischen Darstellung,
- Figur 6: einen Längsschnitt gemäß Schnittlinie VI-VI aus Figur 4 und
- Figur 7.: eine ungeschnittene Seitenansicht des Rückschlag- ventils.

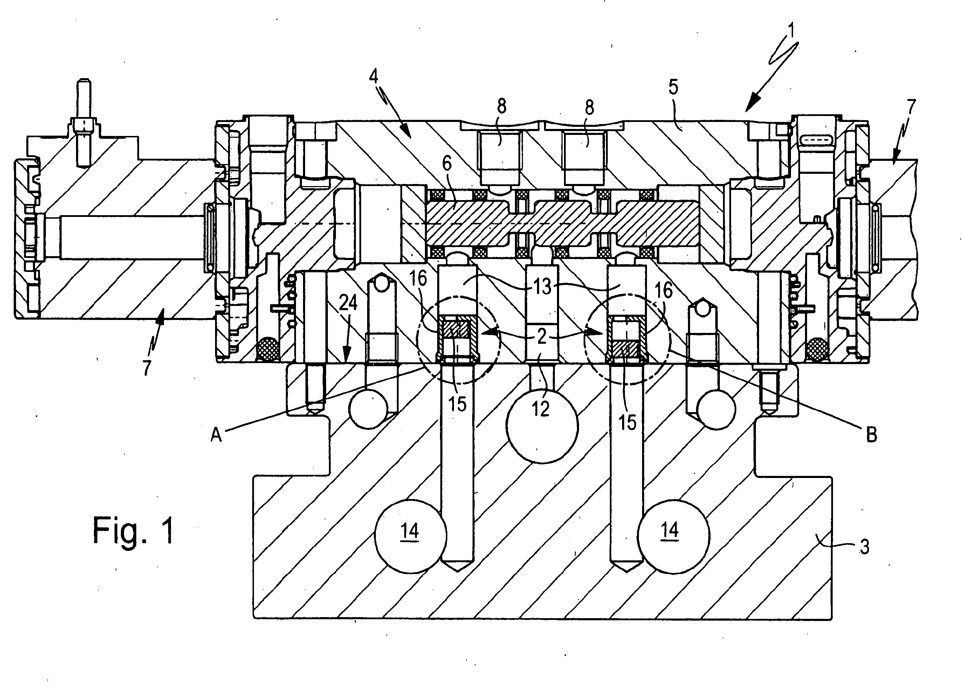

Zur Figur 1 ist anzumerken, dass die Schnittebene darin die Rückschlagventile abweichend zur Schnittebene III-III geradlinig durchsetzt, so dass der Überströmkanal außerhalb der Schnittebene liegt und deshalb nur gestrichelt angedeutet ist.

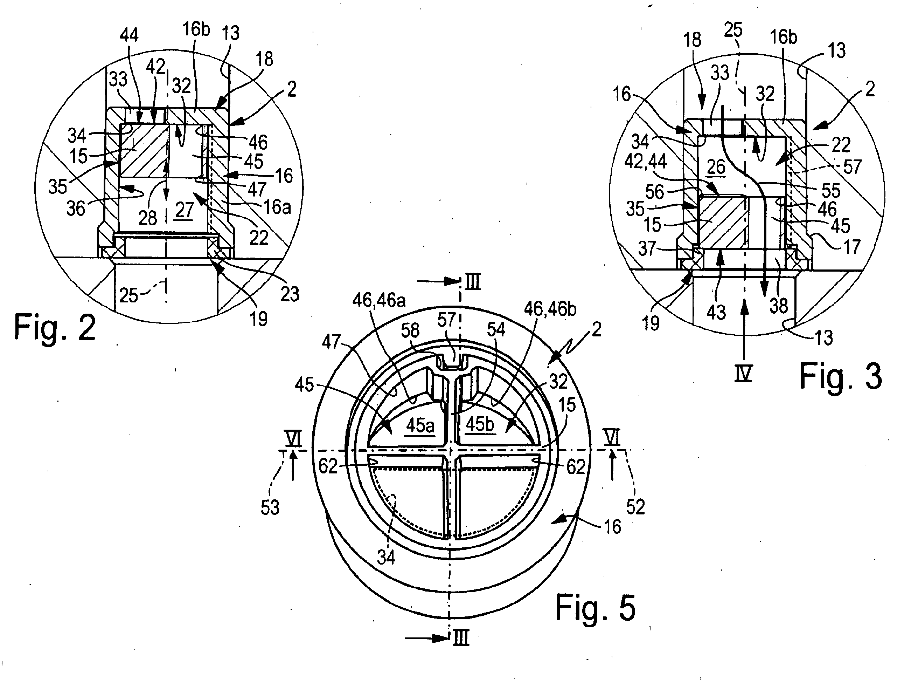

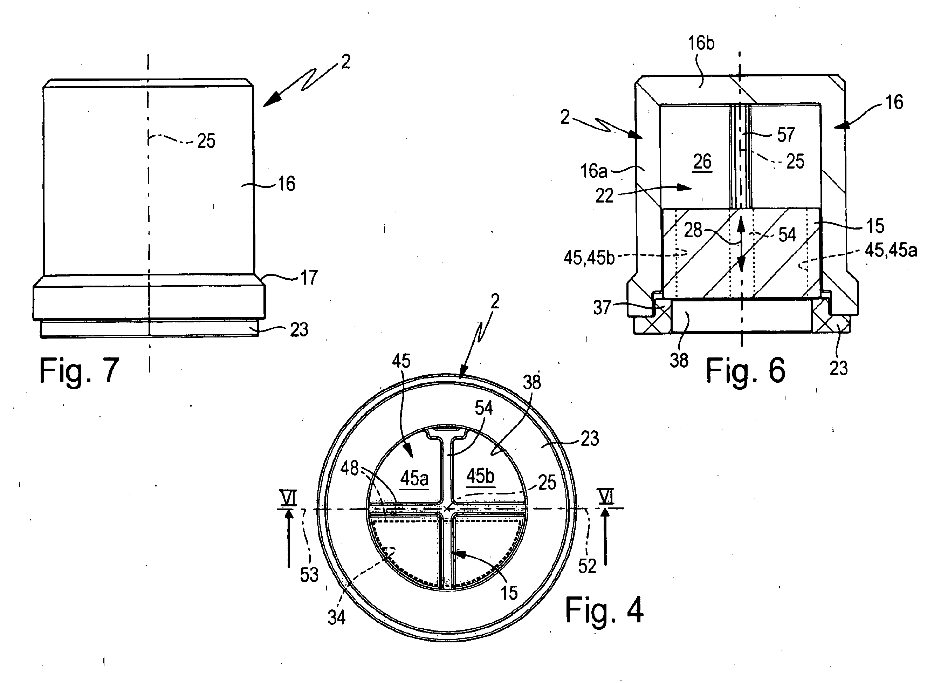

Aus Figur 1 geht eine Ventileinheit 1 hervor, die mit zwei Rückschlagventilen 2 ausgestattet ist. Die Rückschlagventile 2- sind von gleicher Bauart und gehen in einer bevorzugten Ausgestaltung auch aus den Figuren 2 bis 7 hervor.

Die Ventileinheit 1 beinhaltet einen Verteilerkörper 3 und mehrere darauf montierte Mehrwegeventile 4, von denen nur eines abgebildet ist. Jedes Mehrwegeventil 4 verfügt über ein Ventilgehäuse 5, in dem ein Ventilschieber 6 aufgenommen ist, der durch Fluidkraft in verschiedenen Schaltstellungen positionierbar ist. Die Fluidkraft liefert ein Vorsteuermedium, das den Stirnseiten des Ventilschiebers 6 mittels eines oder mehrerer Vorsteuerventile 7 züführbar ist, die Bestandteile des Mehrwegeventils 4 sind. Je nach Schaltstellung des Ventilschiebers 6 werden zwei mit einem nicht weiter abgebildeten Verbraucher verbindbare Arbeitskanäle 8 wahlweise mit einem Speisekanal 12 oder mit einem Fluid-Abführkanal 13 fluidisch verbunden. Beim Ausführungsbeispiel sind die Mehrwegeventile 4 als 5/2-Wegeventile ausgebildet und enthalten jeweils zwei Fluid-Abführkanäle 13.

Über den Speisekanal 12 wird das den angeschlossenen Verbrauchern zuzuführende Fluid eingespeist. Das verbrauchte, von den Verbrauchern zurückströmende Fluid wird über die Fluid-Abführkanäle 13 zu einer Drucksenke abgeführt, insbesondere zur Atmosphäre.

Bei dem von den Mehrwegeventilen 4 gesteuerten Fluid handelt es sich insbesondere um Druckluft oder um ein anderes gasförmiges Medium. In diesem Fall kann man die Fluid-Abführkanäle 13 auch als Entlüftungskanäle bezeichnen.

Die Fluid-Abführkanäle 13 mehrerer Mehrwegeventile 4 kommunizieren im Verteilerkörper 3 mit mindestens einem gemeinsam zugeordneten Sammel-Abführkanal 14. Dieser Sammel-Abführkanal 14 leitet das abzuführende Fluid zu der schon erwähnten Drucksenke.

Die mehreren Mehrwegeventile 4 können auch ohne separaten Verteilerkörper 3 zu einer Baugruppe vereinigt sein. Der mindestens eine Sammel-Abführkanal 14 erstreckt sich dann zweckmäßigerweise durch die Ventilgehäuse 5 der aneinandergereihten Mehrwegeventile 4 hindurch. -

Wenn mehrere Mehrwegeventile 4 zur gleichen Zeit eine einen angeschlossenen Verbraucher mit einem Fluid-Abführkanal 13 verbindende Abführstellung einnehmen, kann sich - bedingt durch den begrenzten Strömungsquerschnitt - im zugeordneten Sammel-Abführkanal 14 ein kurzzeitiger Druckanstieg ereignen. Dies kann prinzipiell dazu führen, dass sich Rückwirkungen bis zu den angeschlossenen Verbrauchern einstellen, was zu unerwünschten und nicht kontrollierbaren Aktivitäten der Verbraucher führen kann. Indem in die Fluid-Abführkanäle 13 der einzelnen Mehrwegeventile 4 jeweils ein eine Strömung in Richtung zum zugeordneten Sammel-Abführkanal 14 zulassendes, in der entgegengesetzten Richtung jedoch verhinderndes Rückschlagventil 2 eingeschaltet ist, wird diese Problematik ausgeschaltet.

Vorzugsweise ist das mindestens eine Rückschlagventil 2 im Ventilgehäuse 5 des Mehrwegeventils 4 in den Fluid-Abführkanal 13 eingesetzt. Werden die Mehrwegeventile 4, wie beim Ausführungsbeispiel, auf einem Verteilerkörper 3 montiert, können die Rückschlagventile 2 alternativ auch in entsprechende Kanäle des Verteilerkörpers 3 eingebaut sein.

Jedes Rückschlagventil 2 enthält ein Ventilglied 15, das aufgrund der an ihm anstehenden Druckdifferenz entweder eine aus dem Ausschnitt A in Figur 1 und aus Figur 2 ersichtliche Schließstellung einnimmt, oder eine Offenstellung, die in Figur 1 im Ausschnitt B sowie im Übrigen in den Figuren 3 bis 6 abgebildet ist. Der in der Schließstellung des Ventilgliedes 15 vorherrschende Betriebszustand des Rückschlagventils 2 sei im Folgenden als Sperrbetrieb bezeichnet, der in der Offenstellung des Ventilgliedes 15 vorliegende Betriebszustand als Durchlassbetrieb.

Das Rückschlagventil 2 verfügt über einen Gehäusekörper 16, mit dem es in den Fluid-Abführkanal 13 eingesetzt ist. Der Gehäusekörper 16 kann in den Fluid-Abführkanal 13 einfach axial eingesteckt und bei Bedarf auch eingepresst sein. Eine Anschlagschulter 17 an seinem Außenumfang begrenzt im Zusammenwirken mit dem Ventilgehäuse 5 die Montagetiefe.

Der Gehäusekörper 16 hat vorzugsweise eine hohlzylindrische Wandung 16a, die zur Bildung der Anschlagschulter 17 am Außenumfang abgestuft sein kann und die gemeinsam mit einem an einer ersten Stirnseite 18 des Gehäusekörpers 16 angeordneten Bodenwand 16b eine Ventilkammer 22 begrenzt. Auf diese Weise ergibt sich für den Gehäusekörper 16 zweckmäßigerweise die aus der Zeichnung ersichtliche topfförmige Gestalt, wobei die Bodenwand 16b und die hohlzylindrische Wandung 16a insbesondere einstückig miteinander verbunden sind.

Der Gehäusekörper 16 ist mit der Bodenwand 16b voraus in den Fluid-Abführkanal 13 eingesetzt, so dass die der ersten Stirnseite 18 entgegengesetzte zweite Stirnseite 19 zum Sammel-Abführkanal 14 weist. Im Bereich dieser zweiten Stirnseite 19 ist der Gehäusekörper 16 und mithin die Ventilkammer 22 ohne Wandung ausgebildet und dementsprechend offen, wobei allerdings noch ein in Figur 5 nicht abgebildeter Dichtungsring 23 vorgelagert sein kann, der mit der das Mehrwegeventil 4 tragenden Montagefläche 24 des Verteilerkörpers 3 dichtend zusammenwirkt.

Bei einem nicht abgebildeten Ausführungsbeispiel sind die hohlzylindrische Wandung 16a und/oder die Bodenwand 16b direkt vom Ventilgehäuse 5 des Mehrwegeventils 4 gebildet. Auf diese Weise lässt sich ein separater Gehäusekörper 16 bei Bedarf einsparen.

Das Rückschlagventil 2 verfügt über eine querschnittsmittig verlaufende, im Folgenden als Hauptachse 25 bezeichnete Längsachse. Sie bildet gleichzeitig die zentrale Mittellängsachse der Ventilkammer 22.

Die Ventilkammer 22 wird durch das Ventilglied 15 in einen der ersten Stirnseite 18 zugewandten Zuströmabschnitt 26 sowie einen der zweiten Stirnseite 19 zugewandten Abströmabschnitt 27 unterteilt. Indem das Ventilglied 15 in der Ventilkammer 22 zur Ausführung einer mit einem Doppelpfeil markierten Umschaltbewegung 28 axial bewegbar ist, ergeben sich entsprechend der momentanen Stellung unterschiedliche Längenverhältnisse zwischen den beiden Abschnitten 26, 27 der Ventilkammer 22.

Der Zuströmabschnitt 26 ist axial zum einen vom Ventilglied 15 und zum anderen von der der Ventilkammer 22 zugewandten axialen Bodenfläche 32 der Bodenwand 16b begrenzt.

Ein die Bodenwand 16b durchsetzender Zuströmkanal 33 mündet mit einer Zuströmöffnung 34 an der Bodenfläche 32 mit axialer Orientierung in die Ventilkammer 22 ein (unter dem Begriff "axial" ist, sofern nichts anderes bemerkt wird, die Achsrichtung der Hauptachse 25 zu verstehen). Die Zuströmöffnung 34 nimmt nur einen Bruchteil der Bodenfläche 32 ein.

Das Ventilglied 15 ist zweckmäßigerweise nach Art eines Kolbens axial gleitverschieblich in der Ventilkammer 22 aufgenommen. Zu Gunsten kompakter Längenabmessungen des Rückschlagventils 2 verfügt es über eine nur kurze Baulänge und ist scheibenähnlich gestaltet. Mit seiner bezüglich der Hauptachse 25 radial nach außen orientierten umfangsseitigen Außenfläche 35 liegt es gleitverschieblich an der Innenfläche 36 der beim Ausführungsbeispiel von der hohlzylindrischen Wandung 16a gebildeten Seitenwand an.

Aufgrund seiner axialen Verschiebbarkeit kann das Ventilglied 15 abwechselnd in der Offenstellung und in der Schließstellung positioniert werden. In der Schließstellung liegt es mit seiner der ersten Stirnseite 18 zugewandten ersten Stirnfläche 42 an der Bodenfläche 32 an, so dass das Volumen des Zuströmabschnittes 26 praktisch gleich null ist. In der Offenstellung ist das Ventilglied 15 in Richtung der zweiten Stirnseite 19 verlagert und somit von der Bodenfläche 32 abgehoben. Diese Offenstellung wird durch in den Verfahrweg des Ventilgliedes 15 ragende Anschlagmittel 37 begrenzt, die beim Ausführungsbeispiel in vorteilhafter Weise von dem Dichtungsring 23 gebildet sind, der ein Stückweit nach radial innen über die Innenfläche 36 vorsteht. In der Offenstellung ist das Volumen des Abströmabschnittes 27 praktisch gleich null.

Für den Ein- und Austritt von Fluid schließt sich an den Abströmabschnitt 27 an der dem Ventilglied 15 entgegengesetzten zweiten Stirnseite 19 eine Abströmöffnung 38 an, die beispielsweise von dem Dichtungsring 23 umgrenzt ist. Ihr Querschnitt ist zweckmäßigerweise größer als derjenige der Zuströmöffnung 33, damit ein sich aus dem Sammel-Abführkanal 14 rückstauendes Fluid mit großer Strömungsrate und mithin großer Schubenergie in den Abströmabschnitt 27 eintreten und auf die der Abströmöffnung 38 zugewandte zweite Stirnfläche 43 des Ventilgliedes 15 auftreffen kann, um das Ventilglied 15 schlagartig in die Schließstellung umzuschalten.

Welche der beiden möglichen Schaltstellungen das Ventilglied 15 letztlich einnimmt und beibehält, hängt von der zwischen dem Zuströmabschnitt 26 und dem Abströmabschnitt 27 herrschenden Druckdifferenz ab. Ist der Druck im Abströmabschnitt 27 höher, befindet sich das Rückschlagventil 2 im Sperrbetrieb. Ist der Druck hingegen im Zuströmabschnitt 26 höher, liegt der Durchlassbetrieb vor.

In der Schließstellung sperrt das Ventilglied 15 die Verbindung zwischen dem Zuströmkanal 33 und dem Zuströmabschnitt 26 ab. Dies geschieht durch einen als Verschlussfläche 44 bezeichneten Abschnitt der ersten Stirnfläche 42, der der Zuströmöffnung 34 axial gegenüberliegt und diese komplett überdeckt, wobei er rings um die Zuströmöffnung 34 herum dichtend an der Bodenfläche 32 anliegt. Auf diese Weise ist die Zuströmöffnung 34 auch von einem Überströmkanal 45 abgesperrt, der das Ventilglied 15 axial durchsetzt und eine ständige Verbindung zwischen dem Zuströmabschnitt 26 und dem Abströmabschnitt 27 herstellt. Der Überströmkanal 45 mündet mit einer ersten Kanalmündung 46 zur ersten Stirnfläche 42 und mit einer zweiten Kanalmündung 47 zur zweiten Stirnfläche 43 des Ventilgliedes 15 aus.

In der Richtung quer zur Hauptachse 25 ergibt sich keinerlei Überlappung oder Überschneidung zwischen der Zuströmöffnung 34 und der ersten Kanalmündung 46. Der der ersten Kanalmündung 46 axial gegenüberliegende Flächenabschnitt der Bodenfläche 32 ist undurchbrochen. Ein Fluid kann somit nur dann von der ersten Stirnseite 18 her in den Zuströmabschnitt 26 eintreten, wenn das Ventilglied 15 die Zuströmöffnung 34 freigegeben hat.

Der Überströmkanal 45 ist in seiner Gesamtheit im Ventilglied 15 ausgebildet. Er ist peripher ringsum von Wandabschnitten des Ventilgliedes 15 begrenzt. Auf diese Weise ergibt sich der Vorteil, dass die umfangsseitige Außenfläche 35 zumindest weitestgehend mit stetigem Verlauf ausgebildet sein kann und somit eine optimale Verschiebeführung bezüglich der Innenfläche 36 realisierbar ist.

Ist das Ventilglied 15 in die Offenstellung verlagert, besteht über den Zuströmabschnitt 26 hinweg eine freie Verbindung zwischen der Zuströmöffnung 34 und dem Überströmkanal 45, so dass von der ersten Stirnseite 18 zuströmendes Fluid durch das nun offene Rückschlagventil 2 hindurch zur zweiten Stirnseite 19 abströmen kann. Damit ist die bei Bedarf gewünschte Fluid-Abführfunktion voll gewährleistet.

Das Umschalten in die Offenstellung geschieht automatisch, wenn der im Zuströmkanal 33 herrschende Druck größer ist als derjenige im Bereich der Abströmöffnung 38. Das über die Zuströmöffnung 34 zuströmende Fluid wirkt unter anderem auf die Verschlussfläche 44 ein und schiebt somit das Ventilglied 15 in die von der Bodenfläche 32 beabstandete Offenstellung.

Eine Besonderheit des Rückschlagventils 2 liegt darin, dass die Zuströmöffnung 34 mit Bezug zu der durch das Zentrum des Ventilgliedes 15 hindurchgehenden Hauptachse 25 außermittig, also quer versetzt in den Zuströmabschnitt 26, einmündet. Die Anordnung ist insbesondere so getroffen, dass sich die Zuströmöffnung 34 und die erste Kanalmündung 46 - in axialer Richtung betrachtet - auf einander entgegengesetzten Seiten der Hauptachse 25 befinden, was aus Figuren 2 bis 4 gut erkennbar ist. Man erkennt hier auch, dass sich die Zuströmöffnung 34 und die erste Kanalmündung 46 vorzugsweise diametral gegenüberliegen.

Die konkrete Gestaltung des Querschnittes der Zuströmöffnung 34 und der ersten Kanalmündung 46 ist beim Ausführungsbeispiel jeweils etwa halbkreisförmig. In beiden Fällen entspricht der Querschnitt einem Kreissektor oder Kreisabschnitt, mit einem Umfangswinkel von im Wesentlichen 180°. Die im Folgenden als Sehnen 48 bezeichenbaren Verbindungslinien zwischen den Endpunkten der kreisbogenförmigen Konturlinien der genannten Querschnitte verlaufen parallel zueinander.

Als optimal hat sich eine Anordnung erwiesen, bei der die Zuströmöffnung 34 und die erste Kanalmündung 46 auf entgegengesetzten Seiten einer Diametralebene 52 liegen, die gemeinsam von der Hauptachse 25 und einer dazu rechtwinkeligen Radialachse 53 aufgespannt wird. Man kann sich somit die Zuströmöffnung 34 und die erste Kanalmündung 46 etwa dadurch entstanden vorstellen, dass ein Kreis mittels einer durch den Mittelpunkt gehenden geraden Linie in zwei Kreishälften unterteilt wird.

Der Querschnitt der ersten Kanalmündung 46 gilt zweckmäßigerweise für den gesamten Überströmkanal 45. Dieser hat zweckmäßigerweise eine lineare, axiale Erstreckung mit über die gesamte Länge gleichbleibendem Querschnitt.

Vor allem aus Gründen der Stabilität des Ventilgliedes 15 ist der Überströmkanal 45 beim Ausführungsbeispiel in zwei sich parallel nebeneinander erstreckende Kanalabschnitte 45a, 45b unterteilt. Zur Unterteilung ist in den Überströmkanal 45 eine sich axial und radial erstreckende Unterteilungswand 54 eingezogen. Die Unterteilung des Überströmkanals 45 hat auch eine entsprechende Unterteilung der ersten Kanalmündung 46 in zwei Mündungsabschnitte 46a, 46b zur Folge. Der Querschnitt dieser beiden Mündungsabschnitte 46a, 46b entspricht exemplarisch jeweils demjenigen eines Viertelkreises.

Wenn das Fluid das Rückschlagventil 2 im Durchlassbetrieb von der ersten Stirnseite 18 zur zweiten Stirnseite 19 durchströmt, ergibt sich in etwa der in Figur 3 durch einen Pfeil bei 55 markierte Strömungsverlauf, woraus ersichtlich ist, dass die Richtungsänderungen minimal sind und insbesondere ein allseitiges Auffächern der Strömung vermieden wird. Auf diese Weise ergibt sich ein relativ geringer Strömungswiderstand und ein hoher möglicher Durchfluss im Durchlassbetrieb.

Die in der Schließstellung vorhandene Anlage des Ventilgliedes 15 an der Bodenfläche 32 kann auch ohne zusätzliche Dichtungsmittel ausreichend sein, um das Innere der Ventilkammer 22 vom Zuströmkanal 33 abzusperren, wenn der im Abströmabschnitt 27 herrschende Fluiddruck höher ist als derjenige jenseits des Ventilgliedes 15. Gleichwohl besteht die Möglichkeit, zusätzliche Dichtungsmittel 56 vorzusehen, wie sie in Figur 3 angedeutet sind. Die Dichtungsmittel 56 sind beispielsweise an der ersten Stirnfläche 42 so angeordnet, dass sie - axial betrachtet - die Zuströmöffnung 34 umrahmen und in der Schließstellung um die Zuströmöffnung 34 herum an der Bodenfläche 32 anliegen. Alternativ könnten die Dichtungsmittel 56 auch um die Zuströmöffnung 34 herum direkt an der Bodenfläche 32 ausgebildet sein.

Aufgrund des exzentrischen Versatzes zwischen der Zuströmöffnung 34 und der ersten Kanalmündung 46 sollte zur Vermeidung von Fehlfunktionen die auf die Hauptachse 25 als Zentrum bezogene Drehwinkelposition zwischen der Zuströmöffnung 34 und der ersten Kanalmündung 46 nicht derart veränderlich sein, dass sich in der Schließstellung möglicherweise doch eine Überlappung einstellt. Aus diesem Grund ist das Ventilglied 15 bezüglich der Ventilkammer 22 verdrehgesichert. Die auf die Hauptachse 25 als Zentrum bezogene Drehwinkellage des Ventilgliedes 15 relativ zur Ventilkammer 22 und somit auch relativ zur Zuströmöffnung 34 bleibt also stets die gleiche.

Vorzugsweise wird die Verdrehsicherung des Ventilgliedes 15 durch gleitverschieblich ineinander eingreifende erste und zweite Verdrehsicherungsmittel 57, 58 realisiert, von denen die einen radial innen an der Seitenwand 16a und die anderen radial außen am Ventilglied 15 angeordnet sein können. Exemplarisch ist eine die ersten Verdrehsicherungsmittel 57 bildende, sich axial erstreckende Verdrehsicherungsrippe am Innenumfang der Seitenwand 16a angeordnet, die in eine die zweiten Verdrehsicherungsmittel 58 bildende, sich ebenfalls axial erstreckende Verdrehsicherungsnut gleitverschieblich eingreift, die in die umfangsseitige Außenfläche 35 des Ventilgliedes 15 eingebracht ist. Auch eine umgekehrte Anordnung ist möglich. Alternativ sind natürlich auch andere Verdrehsicherungsmaßnahmen möglich.

Zu Gunsten eines guten Ansprechverhaltens besteht das Ventilglied 15 zweckmäßigerweise aus einem gewichtssparenden Kunststoffmaterial. Es ist außerdem von Vorteil, wenn stirnseitig im Ventilglied 15 eine oder mehrere axiale Aussparungen 62 ausgebildet sind, um Material einzusparen, ohne die Gleitführung zwischen Ventilglied 15 und Seitenwand 16a zu beeinträchtigen.

Vorteilhaft auf das Ansprechverhalten wirkt sich beim Ausführungsbeispiel auch aus, dass das Ventilglied 15 axial frei beweglich in der Ventilkammer 22 aufgenommen ist und unter keinerlei Federvorspannung steht. Es sind insbesondere keine Federmittel vorhanden, die das Ventilglied 15 ständig in Richtung der Schließstellung drücken. Auf diese Weise kann gewährleistet werden, dass das Ventilglied 15 schon bei minimaler Druckdifferenz zum einen in die Offenstellung schalten kann, um einen Entlüftungsprozess zu ermöglichen, zum anderen aber auch in die Schließstellung schalten kann, um einen unerwünschten Fluiddurchtritt aus dem Abströmabschnitt 27 in den Zuströmkanal 33 zu verhindern. Das Ventilglied 15 ist axial lose beweglich in der Ventilkammer 22 angeordnet und hat somit im fluiddrucklosen Zustand keine Vorzugsstellung.

## Patentansprüche

1. Rückschlagventil, mit einer Ventilkammer (22), in der ein in Achsrichtung einer Hauptachse (25) zwischen einer Schließstellung und einer Offenstellung linear bewegliches Ventilglied (15) angeordnet ist, das die Ventilkammer (22) in einen mit einer Zuströmöffnung (34) verbundenen Zuströmabschnitt (26) und einen mit einer Abströmöffnung (38) verbundenen Abströmabschnitt (27) unterteilt, wobei die Zuströmöffnung (34) an einer dem Ventilglied (15) axial gegenüberliegenden Bodenfläche (32) in den Zuströmabschnitt (26) einmündet und ihr eine am Ventilglied (15) angeordnete Verschlussfläche (44) derart gegenüberliegt, dass über die Zuströmöffnung (34) zuströmendes Fluid das Ventilglied (15) durch Beaufschlagung der Verschlussfläche (44) von der Bodenfläche (32) weg in die Offenstellung verlagert, in der die Zuströmöffnung (34) mit einem den Zuströmabschnitt (26) mit dem Abströmabschnitt (27) verbindenden Überströmkanal (45) kommuniziert, der das Ventilglied (15) mit Querversatz bezüglich der Zuströmöffnung (34) axial durchsetzt und ringsum durch das Ventilglied (15) begrenzt ist, wobei die Zuströmöffnung (34) an der Bodenfläche (32) der Ventilkammer (22) außermittig in den Zuströmabschnitt (26) einmündet und das Ventilglied (15) bezüglich der Ventilkammer (22) verdrehgesichert ist, **dadurch gekennzeichnet, dass** die Querschnitte der Zuströmöffnung (34) und der dem Zuströmabschnitt (26) zugewandten Kanalmündung (46) des Überströmkanals (45) jeweils nach Art eines einen Umfangswinkel von zumindest im Wesentlichen 180° aufweisenden Kreissektors oder Kreisabschnittes gestaltet sind, so dass sich jeweils ein im Wesentlichen halbkreisförmiger Querschnitt ergibt, wobei die Zuströmöffnung (34) und die dem Zuströmabschnitt (26) zugewandte Kanalmündung (46) des Überströmkanals (45) so angeordnet sind, dass die linearen Sehnen (48) ihrer Querschnitts-Konturlinien parallel zueinander verlaufen.

2. Rückschlagventil nach Anspruch 1, **dadurch gekennzeichnet, dass** das Ventilglied (15) ohne Federbeaufschlagung in der Ventilkammer (22) angeordnet und in Achsrichtung der Hauptachse (25) zwischen der Schließstellung und der Offenstellung frei beweglich ist.

3. Rückschlagventil nach Anspruch 1 oder 2, **dadurch gekennzeichnet, dass** das Ventilglied (15), von der Seitenwand (16a) der Ventilkammer (22) geführt, axial verschiebbar in der Ventilkammer (22) angeordnet ist.

4. Rückschlagventil nach Anspruch 3, **dadurch gekennzeichnet, dass** das Ventilglied (15) scheibenförmig und zweckmäßigerweise nach Art eines Kolbens ausgebildet ist.

5. Rückschlagventil nach einem der Ansprüche 1 bis 4, **dadurch gekennzeichnet, dass** zur Verdrehsicherung des Ventilgliedes (15) gleitverschieblich ineinander eingreifende Verdrehsicherungsmittel (57, 58) vorhanden sind, die sich zweckmäßigerweise innen an der Seitenwand (16a) der Ventilkammer (22) und außen im Bereich der rechtwinkelig zur Hauptachse (25) orientierten umfangsseitigen Außenfläche (35) des Ventilgliedes (15) befinden.

6. Rückschlagventil nach einem der Ansprüche 1 bis 5, **dadurch gekennzeichnet, dass** sich die Zuströmöffnung (34) und die dem Zuströmabschnitt (26) zugewandte Kanalmündung (46) des Überströmkanals (45), in Achsrichtung der Hauptachse (25) betrachtet, auf entgegengesetzten Seiten der Hauptachse (25) angeordnet sind und sich zweckmäßigerweise diametral gegenüberliegen.

7. Rückschlagventil nach einem der Ansprüche 1 bis 6 **dadurch gekennzeichnet, dass** die Zuströmöffnung (34) und zumindest die dem Zuströmabschnitt (26) zugewandte Kanalmündung (46) des Überströmkanals (45) auf entgegengesetzten Seiten einer Diametralebene (52) liegen, die von der Hauptachse (25) und einer dazu rechtwinkeligen Radialachse (53) aufgespannt wird.

8. Rückschlagventil nach einem der Ansprüche 1 bis 7, **dadurch gekennzeichnet, dass** der Überströmkanal (45) einen der Achsrichtung der Hauptachse (25) folgenden linearen Verlauf aufweist und zweckmäßigerweise durchgehend den gleichen Querschnitt aufweist.

9. Rückschlagventil nach einem der Ansprüche 1 bis 8, **dadurch gekennzeichnet, dass** der Überströmkanal (45) durch mindestens eine Unterteilungswand (54) in mehrere, sich parallel nebeneinander erstreckende Kanalabschnitte (45a, 45b) unterteilt ist.

10. Rückschlagventil nach einem der Ansprüche 1 bis 9, **dadurch gekennzeichnet, dass** das Ventilglied (15) bei Einnahme der Schließstellung an der Bodenfläche (32) der Ventilkammer (22) anliegt.

11. Rückschlagventil nach einem der Ansprüche 1 bis 10, **dadurch gekennzeichnet, dass** die Ventilkammer (22) in einem zweckmäßigerweise topfförmig ausgebildeten Gehäusekörper (16) ausgebildet ist.

12. Ventileinheit, mit mindestens einem Mehrwegeventil (4), das ein Ventilgehäuse (5) aufweist, in dem mindestens ein beweglicher Ventilschieber (6) angeordnet ist, und mit mindestens einem von dem Ventilschieber (6) gesteuerten Fluid-Abführkanal (13), der mit einem Rückschlagventil (2) nach einem der Ansprüche 1 bis 11 ausgestattet ist.

## Claims

1. Non-return valve with a valve chamber (22) in which is mounted, in the axial direction of a main axis (25), a valve member (15) capable of linear movement between a closed position and an open position, and dividing the valve chamber (22) into an inlet section (26) connected to an inlet port (34) and an outlet section (27) connected to an outlet port (38), wherein the inlet port (34) leads into the inlet section (26) at a bottom surface (32) axially opposite the valve member (15), with a closing surface (44) fitted to the valve member (15) lying opposite it in such a way that fluid flowing through the inlet port (34) shifts the valve member (15) through pressurisation of the closing surface (44) away from the bottom surface (32) into the open position, in which the inlet port (34) communicates with an overflow passage (45) connecting the inlet section (26) with the outlet section (27), which passes axially through the valve member (15) with lateral offset relative the inlet port (34) and is bounded all round by the valve member (15), wherein the inlet port (34) runs into the inlet section (26) off-centre at the bottom surface (32) of the valve chamber (22) and the valve member (15) is prevented from rotation relative to the valve chamber (22), **characterised in that** the cross-sections of the inlet port (34) and the passage orifice (46) of the overflow passage (45) facing the inlet section (26) are each designed in the manner of a circle sector or circle segment with an angle at circumference of at least substantially 180°, resulting in each case in a substantially semicircular cross-section, wherein the inlet port (34) and the passage orifice (46) of the overflow passage (45) facing the inlet section (26) are so arranged that the linear chords (48) of their cross-section contour lines run parallel to one another.

2. Non-return valve according to claim 1, **characterised in that** the valve member (15) is mounted in the valve chamber (22) without spring loading and may be moved freely in the axial direction of the main axis (25) between the closed position and the open position.

3. Non-return valve according to claim 1 or 2, **characterised in that** the valve member (15), guided from the side wall (16a) of the valve chamber (22), is mounted in the valve chamber (22) so as to be able to move axially.

4. Non-return valve according to claim 3, **characterised in that** the valve member (15) is disc-shaped and is expediently in the form of a piston.

5. Non-return valve according to any of claims 1 to 4 **characterised in that**, to prevent rotation of the valve member (15), sliding rotation prevention means (57, 58) engaging in one another are provided, expediently located inside on the side wall (16a) of the valve chamber (22) and outside in the area of the peripheral-side outer surface (35) of the valve member (15) oriented at right-angles to the main axis (25).

6. Non-return valve according to any of claims 1 to 5, **characterised in that** the inlet port (34) and the passage orifice (46) of the overflow passage (45) facing the inlet section (26), viewed in the axial direction of the main axis (25), are arranged on opposite sides of the main axis (25) and expediently lie diametrically opposite one another.

7. Non-return valve according to any of claims 1 to 6, **characterised in that** the inlet port (34) and at least the passage orifice (46) of the overflow passage (45) facing the inlet section (26) lie on opposite sides of a diametrical plane (52) spanned by the main axis (25) and a radial axis (53) at right-angles to the former.

8. Non-return valve according to any of claims 1 to 7, **characterised in that** the overflow passage (45) has a linear course following the axial direction of the main axis (25) and expediently the same cross-section throughout.

9. Non-return valve according to any of claims 1 to 9, **characterised in that** the overflow passage (45) is divided by at least one dividing wall (54) into several passage sections (45a, 45b) extending parallel to one another.

10. Non-return valve according to any of claims 1 to 9, **characterised in that** the valve member (15), on assuming the closed position, fits up against the bottom surface (32) of the valve chamber (22).

11. Non-return valve according to any of claims 1 to 10, **characterised in that** the valve chamber (22) is formed in an expediently pot-shaped housing body (16).

12. Valve unit with at least one multiway valve (4) with a valve casing (5), in which is mounted at least one movable valve spool (6), and with at least one fluid discharge passage (13) controlled by the valve spool (6) and equipped with a non-return valve (2) according to any of claims 1 to 11.

## Revendications

1. Clapet anti-retour, comprenant une chambre de clapet (22) dans laquelle est disposé un élément de clapet (15) linéairement mobile dans la direction axiale d'un axe principal (25) entre une position fermée et une position ouverte et divisant la chambre de clapet (22) en une section d'afflux (26) reliée à une ouverture d'afflux (34) et une section de reflux (27) reliée à une ouverture de reflux (38), l'ouverture d'afflux (34) débouchant sur une surface inférieure (32) axialement opposée à l'élément de clapet (15) dans la section d'afflux (26) et une surface de fermeture (44) disposée axialement sur l'élément de clapet (15) lui étant opposée de telle sorte que, du fait de la sollicitation de la surface de fermeture (44) à distance de la surface inférieure (32), le fluide affluant par l'ouverture d'afflux (34) déplace l'élément de clapet (15) dans la position ouverte dans laquelle l'ouverture d'afflux (34) communique avec un canal d'écoulement (45) reliant la section d'afflux (26) à la section de reflux (27), traversant axialement l'élément de clapet (15) avec un décalage transversal par rapport à l'ouverture d'afflux (34) et dont le pourtour est délimité par l'élément de clapet (15), l'ouverture d'afflux (34) sur la surface inférieure (32) de la chambre de clapet (22) débouchant de manière excentrée dans la section d'afflux (26) et l'élément de clapet (15) étant empêché de tourner par rapport à la chambre de clapet (22), **caractérisé en ce que** les sections transversales de l'ouverture d'afflux (34) et de l'embouchure (46) du canal d'écoulement (45) tournée vers la section d'afflux (26) sont conçues respectivement à la façon d'un secteur de cercle ou d'un segment de cercle présentant un angle inscrit d'au moins sensiblement 180°, de sorte que cela aboutit respectivement à une section transversale sensiblement en forme de demi-cercle, l'ouverture d'afflux (34) et l'embouchure (46) du canal d'écoulement (45) tournée vers la section d'afflux (26) étant disposées de sorte que les cordes linéaires (48) de leurs lignes de contour de section transversale s'étendent parallèlement les unes aux autres.

2. Clapet anti-retour selon la revendication 1, **caractérisé en ce que** l'élément de clapet (15) est disposé dans la chambre de clapet (22) sans être sollicité par un ressort et est librement mobile dans la direction axiale de l'axe principal (25) entre la position fermée et la position ouverte.

3. Clapet anti-retour selon la revendication 1 ou 2, **caractérisé en ce que** l'élément de clapet (15), guidé depuis la paroi latérale (16a) de la chambre de clapet (22), est monté axialement mobile dans la chambre de clapet (22).

4. Clapet anti-retour selon la revendication 3, **caractérisé en ce que** l'élément de clapet (15) est conçu en forme de disque et avantageusement à la façon d'un piston.

5. Clapet anti-retour selon l'une quelconque des revendications 1 à 4, **caractérisé en ce que** pour empêcher l'élément de clapet (15) de tourner, on met à disposition des moyens formant blocage en rotation (57, 58) s'insérant l'un dans l'autre par un glissement coulissant et situés avantageusement côté intérieur sur la paroi latérale (16a) de la chambre de clapet (22) et côté extérieur dans la zone de la surface extérieure (35) de l'élément de clapet (15) située sur la circonférence orientée perpendiculairement à l'axe principal (25).

6. Clapet anti-retour selon l'une quelconque des revendications 1 à 5, **caractérisé en ce que** l'ouverture d'afflux (34) et l'embouchure (46) du canal d'écoulement (45) tournée vers la section d'afflux (26), considérées dans la direction axiale de l'axe principal (25), sont disposées sur les faces opposées de l'axe principal (25) et sont avantageusement diamétralement opposées.

7. Clapet anti-retour selon l'une quelconque des revendications 1 à 6, **caractérisé en ce que** l'ouverture d'afflux (34) et au moins l'embouchure (46) du canal d'écoulement (45) tournée vers la section d'afflux (26) se situent sur les faces opposées d'un plan diamétral (52) défini par l'axe principal (25) et un axe radial (53) perpendiculaire au dit axe principal.

8. Clapet anti-retour selon l'une quelconque des revendications 1 à 7, **caractérisé en ce que** le canal d'écoulement (45) présente un tracé linéaire suivant la direction axiale de l'axe principal (25) et présente avantageusement la même section transversale de bout en bout.

9. Clapet anti-retour selon l'une quelconque des revendications 1 à 8, **caractérisé en ce que** le canal d'écoulement (45) est divisé par au moins une cloison (54) en plusieurs sections de canal (45a, 45b) s'étendant parallèlement les unes aux autres.

10. Clapet anti-retour selon l'une quelconque des revendications 1 à 9, **caractérisé en ce que** l'élément de clapet (15) repose contre la surface inférieure (32) de la chambre de clapet (22) lorsqu'il occupe la position fermée.

11. Clapet anti-retour selon l'une quelconque des revendications 1 à 10, **caractérisé en ce que** la chambre de clapet (22) est conçue dans un corps de boîtier (16) réalisé avantageusement en forme de pot.

12. Unité clapet, comprenant au moins un clapet multivoies (4) comprenant un boîtier de clapet (5) dans lequel est disposé au moins un tiroir de clapet mobile (6), et comprenant au moins un canal d'évacuation de fluide (13) commandé par le tiroir de clapet (6) et équipé d'un clapet anti-retour (2) selon l'une quelconque des revendications 1 à 11.
